Europäisches Patentamt

European Patent Office

Office européen des brevets

(19)

(11) Numéro de publication : **0 098 769**
**B1**

(12) **FASCICULE DE BREVET EUROPÉEN**

(45) Date de publication du fascicule du brevet :
16.04.86

(21) Numéro de dépôt : **83401289.0**

(22) Date de dépôt : **21.06.83**

(51) Int. Cl.⁴ : **A 01 F 29/00**

(54) Benne roulante portée ou semi-portée pour distribution d'aliments de bétail ou épandage de fumier.

(30) Priorité : **22.06.82 FR 8211124**

(43) Date de publication de la demande :
**18.01.84 Bulletin 84/03**

(45) Mention de la délivrance du brevet :
**16.04.86 Bulletin 86/16**

(84) Etats contractants désignés :
**AT BE CH DE GB IT LI LU NL SE**

(56) Documents cités :
**DE-B- 1 279 413
FR-A- 2 051 936
FR-A- 2 320 043
FR-A- 2 335 370
FR-A- 2 373 957
FR-A- 2 450 039
GB-A- 2 070 401**

(73) Titulaire : **Lucas, Gustave
B.P. 9 La Verrie
F-85130 La Gaubretière (FR)**

(72) Inventeur : **Lucas, Gustave
10, rue de la Croix du Marché La Verrie
F-85130 La Gaubretière (FR)**
Inventeur : **Lucas, Gérard
9, rue du Moulin La Verrie
F-85130 La Gaubretière (FR)**

(74) Mandataire : **Phélip, Bruno et al
c/o Cabinet Harlé & Phélip 21, rue de la Rochefoucauld
F-75009 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne une benne roulante portée ou semi-portée destinée à la manutention de produits agricoles et pouvant assurer la distribution d'aliments du bétail dans des auges, la réalisation de litières d'animaux, l'ensilage de fourrages et le prélèvement de produits agricoles au sol, ladite benne comportant un dispositif transporteur s'étendant dans un plan sensiblement horizontal et acheminant le produit vers un dispositif de déchiquetage constitué de rotors horizontaux dont les axes sont superposés dans un plan frontal de la benne et situé en amont d'un dispositif d'éjection du produit, ledit dispositif d'éjection étant muni d'un ventilateur de grand diamètre placé à l'avant de la benne et de moyens capables de distribuer à volonté le produit mis en mouvement par le ventilateur soit latéralement hors de la benne soit dans la benne elle-même pour un recyclage, ladite benne comportant en outre un dispositif hacheur associé au dispositif d'éjection et destiné à couper le produit en éléments très courts.

Il est désormais connu dans les installations d'élevage du bétail de distribuer les aliments composés de fourrages associés ou non à des compléments minéraux par déversement latéral du chargement du véhicule affecté à ladite distribution selon une bande parallèle aux couloirs de distribution des stalles selon un débit le plus régulier possible. Ce type de véhicule est décrit notamment dans le document FR-A-2 335 370, au nom de la demanderesse, ledit véhicule comportant entre autres un dispositif transporteur acheminant le produit à distribuer vers un dispositif de déchiquetage en aval duquel est situé un dispositif d'éjection vers l'extérieur d'un côté ou de l'autre de la benne. Le dispositif transporteur consiste dans ce cas en un groupe de plusieurs cylindres d'axes parallèles acheminant le produit contenu dans la benne vers l'avant de celle-ci ; le dispositif de déchiquetage est composé de deux rotors montés diamétralement opposés sur un plateau circulaire disposé frontalement à l'avant de la benne et tournant autour d'un axe horizontal, lequel plateau muni de pales joue le rôle de ventilateur engendrant par rotation le flux d'air nécessaire à l'éjection du produit, laquelle s'effectue latéralement à travers une ouverture pratiquée sur la paroi latérale d'une virole cylindrique, placée à volonté soit en regard d'un dispositif de brassage en circuit fermé, soit en regard d'un orifice d'évacuation situé sur chacun des flancs verticaux de la benne pour un épandage au sol ou une distribution dans des auges. Dans le document FR-A-2 496 571 également au nom de la demanderesse, le dispositif de déchiquetage est constitué de rotors d'axes horizontaux disposés superposés dans un plan frontal en amont du dispositif d'éjection réalisé selon un ventilateur ou turbine de grand diamètre évoluant dans un carénage circulaire constituant la paroi transversale de la benne et communiquant avec le volume intérieur de la benne au moyen d'une découpure centrale ; la même addition décrit par ailleurs une herse disposée dans un plan frontal en amont des rotors de déchiquetage ainsi qu'une tôle plafond évitant le recul du produit sous l'action des rotors, ces différents équipements permettant de procéder en amont du dispositif de déchiquetage à une opération de tronçonnage en longueur des bottes cylindriques de fourrage par exemple et de régulation le débit d'entrée du produit dans le dispositif de déchiquetage.

Le document DE-B-1 279 413 décrit une benne du genre de celles des documents ci-dessus, et qui est pourvue en outre d'un dispositif de hachage comportant des couteaux portés par la face avant des pales du ventilateur, si bien que, lorsque du produit est prélevé au sol, il est haché avant d'être envoyé dans la benne ou déversé à l'extérieur. Un tel appareil ne permet pas de faire subir au produit un nouveau hachage lorsqu'il est prélevé à l'intérieur de la benne pour être distribué ou recyclé.

La présente invention a pour but de fournir une benne qui permet non seulement le hachage d'un produit directement prélevé au sol, mais encore permet que les cycles des opérations de déchiquetage et de hachage puissent se succéder autant de fois qu'il est nécessaire pour atteindre le degré de hachage désiré, le produit pouvant être, enfin d'opération, déversé dans la benne elle-même, dans une remorque roulant parallèlement à celle-ci, ou encore dans une auge, sur une litière ou dans un silo. Ce résultat est obtenu selon l'invention par un dispositif hacheur qui est disposé entre le ventilateur et les moyens de distribution, si bien que tout le produit entraîné par le ventilateur passe dans le dispositif hacheur.

Le dispositif hacheur de préférence, consiste dans un rotor hacheur entraîné en rotation autour d'un axe horizontal à partir de l'arbre d'entraînement du ventilateur, lequel rotor équipé de couteaux coopère avec un contre-couteau, le produit coupé étant évacué latéralement pour une distribution directe sur les lieux, soit dans la benne elle-même ou dans une remorque se déplaçant parallèlement à l'aide d'une goulotte orientable. Le produit à traiter peut provenir de la benne elle-même ou être prélevé à même sur le terrain : dans ce dernier cas, ledit produit accède au dispositif d'éjection et au dispositif hacheur, par l'intermédiaire d'une ouverture située en partie basse de la face avant de la benne, après prélèvement au sol du produit à l'aide d'un dispositif connu, tel qu'un pick-up ou autre équipement de ce genre.

Les dessins annexés illustrent un mode de réalisation d'une benne équipée selon l'invention. Dans ceux-ci :

Figure 1 représente une benne vue en élévation coupe longitudinale,

Figure 2 représente une vue transversale de l'arrière de la benne selon un mode de réalisation dans lequel le dispositif hacheur débite latéralement à l'extérieur de la benne,

Figure 3 représente en vue transversale de l'arrière une variante de réalisation de la benne dans laquelle le dispositif hacheur débite dans une goulotte orientable permettant le déversement du produit haché soit dans la benne, soit en un point de stockage, silo par exemple, ou dans un autre véhicule de transport.

Telle que représentée, la benne comporte un dispositif transporteur constitué par exemple d'un tapis convoyeur à chaîne 1 dont la translation vers l'avant de la remorque alimente un dispositif de déchiquetage composé de rotors horizontaux 2 se superposant dans un plan frontal par rapport au déplacement du tapis, lesquels rotors peuvent être soit des hérissons classiques soit des rotors dits démêleurs à doigts rétractables, par exemple, soit des rotors équipés de dents déchiqueteuses associées à des disques tronçonneurs. Complémentairement à des rotors est montée en partie haute de la benne une herse 3 dont les dents s'inscrivent entre les disques tronçonneurs et/ou les dents déchiqueteuses, ou les doigts équipant le type de rotors utilisés. L'avant de la benne est équipé d'un dispositif d'éjection 4 constitué d'un ventilateur ou turbine de grand diamètre entraîné par la prise de force du tracteur.

Le dispositif hacheur, objet de l'invention, est constitué d'un rotor 5 d'axe horizontal entraîné en rotation à l'aide d'une courroie ou d'une chaîne de transmission reliant son axe à celui du ventilateur d'éjection. Ce rotor placé dans le champ d'action du ventilateur d'éjection et au-dessus de celui-ci, peut distribuer le produit soit à droite, soit à gauche selon sa position relative par rapport audit ventilateur et selon le sens de rotation de celui-ci. Le rotor hacheur est équipé de couteaux coopérant avec un contre-couteau 6 fixé sur la paroi attenante de la benne.

La paroi avant de la benne comporte en partie basse une ouverture de chargement 7, pouvant être obturée à volonté, destinée à permettre le prélèvement du produit au sol à l'aide d'un dispositif classique tel que le dispositif dit pick-up par exemple. La benne ainsi équipée permet donc son utilisation au titre de récolteuse à fourrage auto-chargeuse. L'andain prélevé au sol, accède à travers l'ouverture 7 au ventilateur 4, lequel dirige le produit vers le rotor hacheur 5.

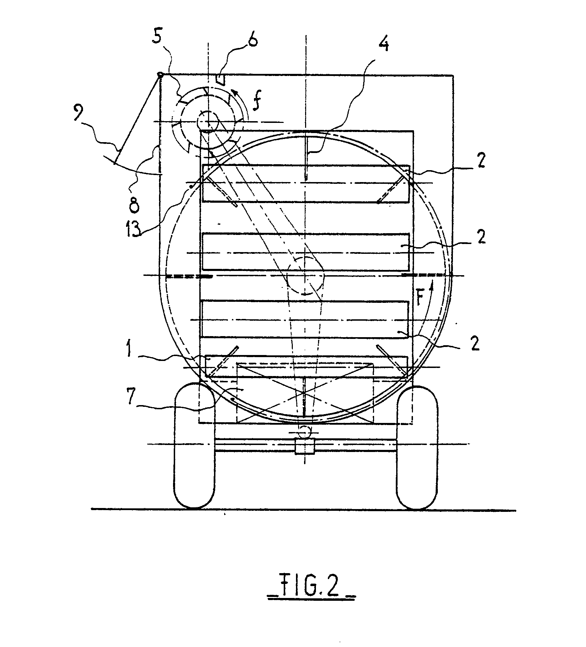

Dans une première variante de réalisation illustrée en figure 2, le rotor hacheur 5 est monté à gauche pour un observateur placé derrière la benne. Le produit pris en charge par le ventilateur 4 tournant selon la flèche F, est propulsé vers le rotor hacheur tournant selon la flèche f de même sens de rotation que le ventilateur : le contre-couteau 6 est situé sur le plafond de la benne constituant le carter du ventilateur, en amont de la section de passage la plus étroite existant entre ledit plafond et le champ d'action du rotor. Le produit haché est ensuite évacué vers l'extérieur de la benne à travers une ouverture 8 prévue en partie haute de la paroi latérale de la benne, munie d'un déflecteur orientable 9.

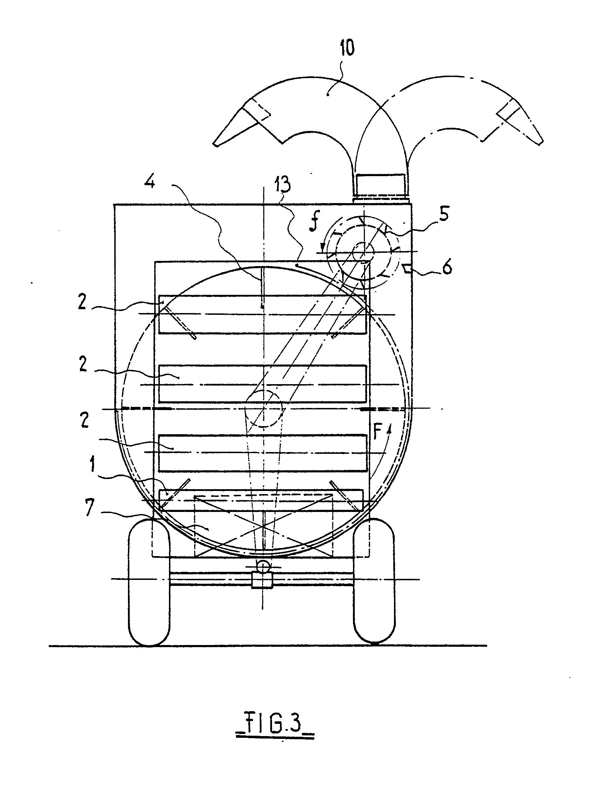

Dans une autre variante de réalisation selon la figure 3, le rotor hacheur est monté à droite pour un observateur placé derrière la benne. Le produit est expulsé par le ventilateur 4 tournant selon la flèche F, vers le rotor hacheur 5 tournant dans le même sens selon f, le contre-couteau 6 est placé sur la paroi latérale de la benne en amont de la section de passage la plus étroite existant entre ladite paroi et le champ d'action du rotor. Le produit haché est dirigé vers une goulotte recourbée 10 en col de cygne, laquelle goulotte montée sur la face supérieure du plafond de la benne constituant le carter du ventilateur 4 est orientable par pivotement autour d'un axe vertical : une telle disposition permet le déversement du produit haché soit dans la benne elle-même pour subir éventuellement un ou plusieurs nouveaux passages du produit dans le dispositif hacheur pour atteindre le taux de hachage désiré, soit dans une remorque se déplaçant parallèlement à la benne, la benne dans ce dernier cas faisant office de benne chargeuse.

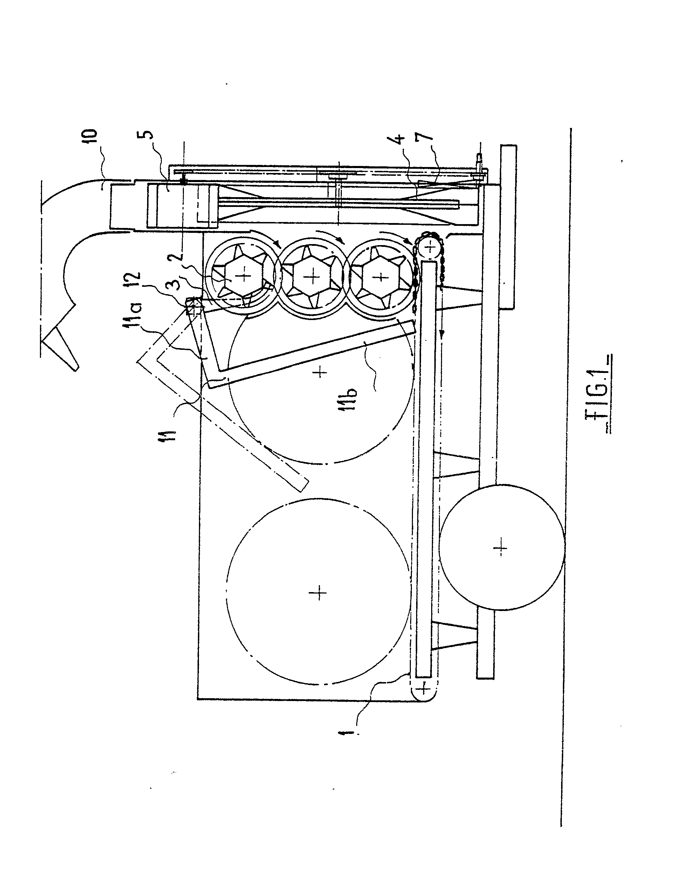

La benne comporte une barrière anti-recul 11 équipée de barreaux crantés ou non permettant de maintenir le produit à déchiqueter contenu dans la benne en contact avec les rotors 2 du dispositif de déchiquetage, en particulier quand le produit consiste dans du fourrage compacté sous forme de balles rondes. Telle que représentée en figure 1, cette barrière a un profil coudé dont la forme s'apparente à une équerre dont une des ailes 11a porte à son extrémité l'axe de pivotement 12, l'aile la plus longue 11b agissant par gravité sur le produit. La position déportée vers l'avant du point de pivotement place en fin d'opération la barrière anti-recul en position inclinée, le pied de celle-ci se trouvant en avant au plus près du rotor inférieur 2, l'espace compris entre les barreaux de la barrière et les rotors allant croissant du bas vers le haut, réalisant ainsi une sorte de chambre de décompression évitant tout risque de bourrage au niveau du dispositif de déchiquetage, le produit excédentaire pouvant gagner la partie haute de la chambre avant de pouvoir être absorbé par les rotors. La barrière évite également tout retour de projection vers la benne.

La benne peut être utilisée uniquement comme benne distributrice conformément aux documents cités au début de la présente description, en neutralisant le dispositif hacheur, ce dernier étant mis hors circuit au moyen d'un déflecteur 13 interposé entre le ventilateur 4 du dispositif d'éjection et le rotor hacheur 5.

Dans la description qui précède, il ressort que le dispositif hacheur combiné au dispositif d'éjection par ventilateur supprime entre ces deux dispositifs la nécessité d'un moyen de transfert tel que des rouleaux entraîneurs, convoyeur à vis, tapis transporteur ou autres. L'équipement de la benne permet de traiter aussi bien du fourrage ou de la paille conditionnée en balles rondes ou parallélépipédiques contenues dans la benne, que des fourrages en vrac ramassés au sol.

L'invention peut s'appliquer à la distribution d'aliments de bétail, à la réalisation et à l'épandage de litière pour certains animaux, en particulier dans des élevages de volailles, ainsi qu'à la constitution de silos d'herbage plus compacts.

## Revendications

1. Benne roulante portée ou semi-portée destinée à la manutention de produits agricoles et pouvant assurer la distribution d'aliments du bétail dans des auges, la réalisation de litières d'animaux, l'ensilage de fourrage et le prélèvement de produits agricoles au sol, ladite benne comportant un dispositif transporteur (1) s'étendant dans un plan sensiblement horizontal et acheminant le produit vers un dispositif de déchiquetage constitué de rotors horizontaux (2) dont les axes sont superposés dans un plan frontal de la benne et situé en amont d'un dispositif d'éjection du produit, ledit dispositif d'éjection étant muni d'un ventilateur (4) de grand diamètre placé à l'avant de la benne et de moyens (10) capables de distribuer à volonté le produit mis en mouvement par le ventilateur (4) soit latéralement hors de la benne soit dans la benne elle-même pour un recyclage, ladite benne comportant en outre un dispositif hacheur (5) associé au dispositif d'éjection et destiné à couper le produit en éléments très courts, caractérisé en ce que le dispositif hacheur (5) est disposé entre le ventilateur (4) et les moyens de distribution (10) si bien que tout le produit entraîné par le ventilateur (4) passe dans le dispositif hacheur (5).

2. Benne selon la revendication 1, caractérisée par le fait que le dispositif hacheur est constitué d'un rotor (5) entraîné en rotation autour d'un axe horizontal à partir de l'arbre d'entraînement du ventilateur (4) du dispositif d'éjection, lequel rotor équipé de couteaux coopère avec un contre-couteau (6) fixé sur la paroi tenante de la benne, ledit rotor placé dans le champ d'action du ventilateur d'éjection et au-dessus de celui-ci pouvant distribuer latéralement soit à droite soit à gauche de la benne, selon sa position relative par rapport audit ventilateur et selon le sens de rotation de celui-ci.

3. Benne selon les revendications 1 et 2, prises ensemble, caractérisée par le fait que le contre-couteau (6) est en amont de la section de passage la plus étroite existant entre la paroi de la benne et le champ d'action du rotor.

4. Benne selon l'une des revendications 1 à 3, prises ensemble, caractérisée par le fait que le rotor hacheur (5) distribue le produit haché à l'extérieur de la benne à travers une ouverture (8) prévue en partie haute de la paroi latérale de la benne et munie d'un déflecteur orientable.

5. Benne selon l'une des revendications 1 à 3, prises ensemble, caractérisée par le fait que le rotor hacheur (5) distribue le produit haché à l'extérieur de la benne dans une remorque placée en parallèle de la benne ou dans la benne elle-même au moyen d'une goulotte recourbée (10) en forme de col de cygne, montée sur la face supérieure du plafond de la benne constituant le carter du ventilateur (4) et pivotante autour d'un axe vertical.

6. Benne selon la revendication 4 ou 5, caractérisée par le fait qu'elle comporte un dispositif déflecteur (13) rétractable dont l'interposition entre le ventilateur (4) du dispositif d'éjection et le rotor (5) permet la mise hors circuit dudit rotor hacheur (5).

7. Benne selon l'une des revendications 1 à 6, caractérisée par le fait qu'elle comporte une barrière anti-recul (11) équipée de barreaux crantés ou non permettant de maintenir le produit à déchiqueter contenu dans la benne en contact avec les rotors (2) du dispositif de déchiquetage, le profil de laquelle barrière s'apparente à une équerre dont une des ailes (11a) porte à son extrémité un axe de pivotement (12), l'aile la plus longue (11b) agissant par gravité sur le produit, la position déportée vers l'avant de l'axe du pivotement plaçant en fin d'opération, la barrière anti-recul en position inclinée, l'extrémité inférieure de l'aile la plus longue se trouvant en avant au plus près du rotor inférieur (2) du dispositif de déchiquetage, l'espace compris entre les barreaux de la barrière et les rotors allant croissant vers le haut de manière à réaliser une sorte de chambre de décompression évitant tout risque de bourrage au niveau du dispositif de déchiquetage, le produit excédentaire pouvant gagner la partie haute de la chambre avant de pouvoir être absorbé par les rotors.

## Claims

1. Supported or semi-supported rolling truck intended for handling agricultural products and capable of distributing cattle fodder into troughs, providing animal litter, carrying out the ensilage of hay and picking up agricultural products from the ground, the said truck possessing a conveyor device (1) extending in a substantially horizontal plane and conveying the product towards a shredding device consisting of horizontal rotors (2), the axes of which are superimposed in a front plane of the truck, and located upstream of a product ejection device, the said ejection device being equipped with a largediameter fan (4) located at the front of the truck, and means (10) capable of distributing as desired the product moved by means of the fan (4) either laterally outside the truck or in the truck itself for recycling, the said truck also possessing a chopper device (5) associated with the ejection device and intended for cutting the product into very short pieces, characterized in that the chopper device (5) is arranged between the fan (4) and the distribution means (10), with the result that the entire product driven by the fan (4) passes into the chopper device (5).

2. Truck according to Claim 1, characterized in that the chopper device consists of a rotor (5) driven in rotation about a horizontal axis from the drive shaft of the fan (4) of the ejection device, the said rotor being equipped with knives interacting with a counter-knife (6) fastened to the supporting wall of the truck, and the said rotor, located in the effective range of the ejection fan and above the latter, being able to distribute laterally either to the right or to the left of the truck, depending on its relative position in relation to the said fan and depending on the direction of rotation of the latter.

3. Truck according to Claims 1 and 2, taken together, characterized in that the counter-knife (6) is upstream of the narrowest passage cross-section which exists between the wall of the truck and the effective range of the rotor.

4. Truck according to one of Claims 1 to 3, taken together, characterized in that the chopper rotor (5) distributes the chopped product outside the truck through an orifice (8) provided in the upper part of the side wall of the truck and provided with an orientable deflector.

5. Truck according to one of Claims 1 to 3, taken together, characterized in that the chopper rotor (5) distributes the chopped product outside the truck into a trailer arranged in parallel with the truck or into the truck itself by means of a curved chute (10) in the form of a swan-neck, mounted on the upper face of the ceiling of the truck forming the housing of the fan (4) and pivoting about a vertical axis.

6. Truck according to Claims 4 or 5, characterized in that it possesses a retractable deflector device (13), which, when interposed between the fan (4) of the ejection device and the rotor (5), makes it possible to inactivate the said chopper rotor (5).

7. Truck according to one of Claims 1 to 6, characterized in that it possesses an anti-recoil barrier (11) equipped with bars, notched or un-notched, making it possible to keep the product to be shredded, contained in the truck, in contact with the rotors (2) of the shredding device, the profile of the said barrier resembling a right-angle bracket, one of the wings (11a) of which carries a pivot axial (12) at its end, the longer wing (11b) acting on the product by means of gravity, the forward-shifted position of the pivot axial putting the anti-recoil barrier in the inclined position at the end of the operation, the lower end of the longer wing being at the front as near as possible to the lower rotor (2) of the shredding device, the space between the bars of the barrier and the rotors increasing towards the top so as to produce a sort of decompression chamber which prevents any risk of clogging at the shredding device, and the excess product being able to reach the upper part of the chamber before it can be absorbed by the rotors.

**Patentansprüche**

1. Abgestützter oder halb abgestützter Ladewagen, bestimmt zur Handhabung von landwirtschaftlichen Produkten und geeignet für die Verteilung von Tierfutter in Trögen, das Ausbringen von Tierstreu, die Silage von Tierfutter und das Aufnehmen von landwirtschaftlichen Produkten vom Boden, welcher Ladewagen eine Transporteinrichtung (1) umfaßt, die sich in einer im wesentlichen horizontalen Ebene erstreckt und das Produkt einer Zerstückelungseinrichtung zufördert, gebildet von horizontalen Rotoren (2), deren Achsen in einer Frontalebene des Ladewagens übereinander angeordnet sind und die stromaufwärts einer Produktauswerfeinrichtung angeordnet ist, versehen mit einem Gebläse (4) großen Durchmessers, plaziert vor dem Ladewagen, und mit Mitteln (10) für die wahlweise Ausbringung des durch das Gebläse (4) in Bewegung gesetzten Produktes entweder seitlich aus dem Ladewagen heraus oder in den Ladewagen selbst für die Rezyklisierung, welcher Ladewagen ferner eine Schneideeinrichtung (5) umfaßt, die der Auswerfeinrichtung zugeordnet ist und bestimmt ist zum Feinschneiden des Produktes in sehr kleine Elemente, dadurch gekennzeichnet, daß die Schneideeinrichtung (5) zwischen dem Gebläse (4) und den Verteilungsmitteln (10) angeordnet ist derart, daß das gesamte von dem Gebläse angetriebene Produkt in die Schneideeinrichtung (5) gelangt.

2. Ladewagen nach Anspruch 1, dadurch gekennzeichnet, daß die Schneideeinrichtung von einem zur Drehung um eine Horizontalachse ausgehend von einer Antriebswelle des Gebläses (4) der Auswerfeinrichtung angetriebenen Rotor (5) gebildet ist, der mit Schneiden besetzt ist, welche mit einer an der haltenden Wandung des Ladewagens befestigten Gegenschneide (6) zusammenwirkten, welcher Rotor in dem Wirkungsbereich des Auswerfgebläses und oberhalb desselben plaziert ist und seitlich entweder nach rechts oder nach links bezüglich des Ladewagens austragen kann, je nach der relativen Position bezüglich des Gebläses und nach der Drehrichtung desselben.

3. Ladewagen nach den beiden Ansprüchen 1 und 2, dadurch gekennzeichnet, daß die Gegenschneide (6) stromaufwärts des engsten Durchlaßquerschnittes angeordnet ist, der zwischen der Wandung des Ladewagens und dem Wirkungsbereich des Rotors existiert.

4. Ladewagen nach einem der Ansprüche 1 bis 3 in ihrer Gesamtheit, dadurch gekennzeichnet, daß der Schneiderotor (5) das geschnittene Produkt nach außerhalb bezüglich des Ladewagens über eine Öffnung (8) austrägt, die im oberen Teil der Seitenwandung des Ladewagens vorgesehen und mit einem orientierbaren Deflektor versehen ist.

5. Ladewagen nach einem der Ansprüche 1 bis 3 in ihrer Gesamtheit, dadurch gekennzeichnet, daß der Schneiderotor (5) das geschnittene Produkt aus dem Ladewagen heraus in einen Anhänger, der parallel zu dem Ladewagen plaziert ist oder in dem Ladewagen selbst fördert, mittels einer gekrümmten Schurre (10) in Schwanenhalsform, die auf der Oberseite der Deckwand des Ladewagens montiert ist, welche das Gebläsegehäuse (4) darstellt, und um eine Vertikalachse schwenkbar ist.

6. Ladewagen nach Anspruch 4 oder 5, dadurch gekennzeichnet, daß er eine einziehbare Deflektoranordnung (13) umfaßt, deren Einfügung zwischen das Gebläse (4) der Auswerfeinrichtung und den Rotor (5) es ermöglicht, den Schneiderotor (5) aus dem Kreislauf herauszunehmen.

7. Ladewagen nach einem der Ansprüche 1 bis 6, dadurch gekennzeichnet, daß er eine Rücklaufsperre (11) umfaßt, versehen mit gegebenenfalls gekerbten Stangen, die es ermöglicht, das zu zerstückelnde Produkt, das sich in dem Ladewagen befindet, in Kontakt mit den Rotoren (2) der Zerstückelungseinrichtung zu halten, wobei das Profil der Sperre sich winkelförmig darstellt, wobei einer der Schenkel (11a) an seinem Ende eine Schwenkachse (12) trägt, während der längere Schenkel (11b) durch Schwerkraft auf das Produkt einwirkt, wobei die nach vorn versetzte Position der Schwenkachse die Rücklaufsperre am Ende der Arbeit in schräge Betriebsstellung plaziert, wobei das untere Ende des längeren Flügels sich vorn dem unteren Rotor (2) der Zerstückelungseinrichtung am nächsten befindet, wobei der Raum zwischen den Stangen der Sperre und den Rotoren nach oben hin zunimmt derart, daß eine Art Dekompressionskammer gebildet wird, die jedes Risiko der Verstopfung auf dem Niveau der Zerstückelungseinrichtung vermeidet, wobei das überschüssige Produkt in die obere Partie der Kammer gelangen kann, bevor es von den Rotoren absorbiert werden kann.

FIG.1

FIG.2

2

FIG.3